# EUROPÄISCHE PATENTSCHRIFT

(11) **EP 1 892 056 B1**
(45) Veröffentlichungstag und Bekanntmachung des Hinweises auf die Patenterteilung: **13.05.2009**
(21) Anmeldenummer: 07114727.6
(22) Anmeldetag: 22.08.2007
(51) Int. Cl.: B23Q 9/00, B23D 59/00, B27B 9/04, B27B 27/00, B27G 19/10

(54) **Anordnung zur Führung einer Handkreissäge auf einem Werkstück und Verfahren zur Ausführung messerscharfer Schnitte**
Assembly for guiding a hand-held circular saw on a workpiece and method for performing razor-sharp cuts
Agencement de guidage d'une scie circulaire sur un outil et procédé d'exécution de coupes tranchantes

(30) Priorität: 25.08.2006 AT 14192006
(43) Veröffentlichungstag der Anmeldung: 27.02.2008
(73) Patentinhaber: Festool GmbH, 73240 Wendlingen (DE)
(72) Erfinder: Einfalt, Johann, 3925 Arbesbach (AT)
(74) Vertreter: Bregenzer, Michael

(56) Entgegenhaltungen:
- CA-A2- 1 131 547
- DE-U1- 8 233 040
- US-A- 4 059 038
- US-A- 4 356 748

## Beschreibung

Die Erfindung betrifft eine Anordnung zur Führung einer Handkreissäge auf einem Werkstück zur Herstellung eines messerscharfen Sägeschnittes, gemäß dem Oberbegriff des Anspruchs 1.

Die Erfindung betrifft ferner ein Verfahren zur Ausführung messerscharfer Sägeschnitte auf Werkstücken mit einer derartigen Anordnung zur Führung einer Handkreissäge.

### Stand der Technik

Um beispielsweise eine Türe bodenseitig abzuschneiden, um sie an die Höhe eines neu verlegten Parkettbodens anzupassen oder aber um eine Arbeitsplatte auf ein exaktes Maß zu kürzen, müssen bei der Montage vor Ort Sägeschnitte ausgeführt werden. Exakt gerade Schnitte erfordern die Verwendung von Führungsleisten, die man beispielsweise mit Hilfe von Schraubzwingen am Werkstück befestigen kann. Eine Handkreissäge oder auch Stichsäge wird dann entlang der Führungsleiste geschoben. Vielfach scheitert das Anbringen von Schraubzwingen. Um dennoch eine gute Geradeausführung für die Handkreissäge zu erreichen, sind aus der DE 3249732 A Führungsplatten bekannt, die jeweils eine eingeformte längslaufende Führungsrippe aufweisen. Die Gleitsohlen der Handkreissäge sind mit komplementären Sicken ausgebildet. Es können mehrere dieser Führungsplatten in Längsrichtung aneinander gereiht und miteinander verbunden werden, um besonders lange Schnitte ausführen zu können.

Ein weiteres Problem ergibt sich dadurch, dass Kreissägeblätter infolge ihrer Zahnung bei freiem Schnitt Späne und Fasern aus der Oberfläche des Werkstückes herausreißen, sodass die Schnittkante unsauber wird. Abhilfe schafft hier beispielsweise, ein auf die Oberfläche des Werkstückes aufgelegtes verlorenes Brettchen mitzuschneiden. Manchmal nützen auch Klebebänder, durch welche hindurchgeschnitten wird, um ein Ausfransen der Schnittkante zu verhindern.

Aus der DE 8233040 U ist eine Führungsplatte bekannt, die wie oben mit einer Führungsrippe ausgebildet ist und die als Ab0schlusskante mit der Schnittlinie eine Führungslippe aus Hartgummi oder dergleichen aufweist. Es soll durch Abstimmung der Abmessungen zwischen dieser Führungslippe und dem Sägeblatt kein Abstand vorhanden sein. Diese Forderung ist in der Praxis nicht realisierbar, denn infolge der Toleranzen und der Dynamik des Sägeblattes beim Schneidevorgang wird die Führungslippe beschädigt und kann dann dem eigentlichen Zweck der Auflage unmittelbar in der Ebene des Sägeblattes nicht mehr dienen.

CA 1 131 547 A2 zeigt eine Anordnung gemäß dem Oberbegriff des Anspruches 1. Ein abschneidbares Basisglied, beispielsweise aus Holz, Hartfasermaterial oder anderem abschneidbarem Material, liegt unmittelbar auf dem zu bearbeitenden Werkstück auf. Auf dem abschneidbaren Basisglied liegt ein Schildglied mit einer Führungsschulter zur Führung einer Kante 3 einer Kreissäge auf.

### Darstellung der Erfindung

Die Erfindung geht von dieser Problematik bei einer Führungseinrichtung aus und zielt darauf ab, durch besondere Maßnahmen langfristig und erneuerbar eine mit dem Schnitt fluchtende Verschleißkante zu erreichen und eine sichere Lagefixierung der Führungseinrichtung auf dem Werkstück zu ermöglichen.

Dies wird bei einer Anordnung der eingangs beschriebenen Art dadurch gewährleistet, dass die Verschleißkante auf einem an der Führungsplatte lösbar befestigten und in Querrichtung zu der Führungsplatte z.B. mittels Klemmschrauben in Längsschlitzen verstellbaren Lineal vorgesehen ist. Die Anordnung ist somit mehrteilig und zerlegbar sowie selbstjustierend ausgebildet, wobei die Justierung bei einem ersten Schnitt automatisch eintritt. Ist die Verschleißkante abgenützt, dann wird das Lineal einfach vorgeschoben, und zwar über die Schnittebene hinaus, und neu fixiert. Beim ersten Schnitt wird das Lineal vom Sägeblatt ohne weiteres Zutun so gekürzt bzw. zugeschnitten, dass die neue Verschleißkante die ideale Position einnimmt. Sie liegt am Werkstück an der Schnittkante genau und ohne Seitenabstand an und verhindert auf diese Weise das Ausfransen des Werkstückes längs des Schnittes. Ein messerscharfer Sägeschnitt wird erreicht.

Eine besondere Ausführungsform ist dadurch gekennzeichnet, dass das flachleistenförmige Lineal sowie die Führungsplatte aus Metall, insbesondere aus Aluminium, bestehen und dass die einander zugewandten Flächen des Lineals einerseits und der Führungsplatte anderseits im Überdeckungsbereich eine flächig ineinander greifende Rippung bzw. Verzahnung aufweisen. Damit werden ein exakt paralleles Nachstellen und eine sichere Lagefixierung erreicht. Das Aluminiumlineal wird bei der Selbstjustierung problemlos vom Sägeblatt durchgeschnitten.

Die Erfindung sieht weiters vor, dass die Führungsplatte bodenseitig mit Gummileisten zur rutschfesten Positionierung auf einem Werkstück ausgebildet ist und dass das Lineal außerhalb des Überdeckungsbereichs mit der Führungsplatte ebenfalls mindestens eine Gummileiste aufweist, deren Höhe der Führungsplattenstärke einschließlich der Gummileistenhöhe auf der Führungsplatte entspricht. Auf diese Weise wird eine durchgehend ebene Auflage erreicht.

Wenn auf dem Lineal bodenseitig eine Gummileiste unmittelbar mit der Verschleißkante fluchtet, dann wird diese bei der Selbstjustierung mitgeschnitten. Sie ist durch das Aluminium des Lineals abgedeckt und erfüllt den Zweck der Lagefixierung der gesamten Anordnung und des Niederhaltens der auszubildenden Schnittkante am Werkstück.

Wenn eine Führungsplatte mit ihrem Lineal in der Länge für einen Sägeschnitt nicht ausreicht, dann werden mehrere Führungsplatten in Längsrichtung aneinandergereiht. Die Verbindung kann durch Formschlusselemente, wie Stifte und Ausnehmungen; erreicht werden. Besonders zweckmäßig ist es aber, wenn bei Aneinanderreihung von Führungsplatten für längere Sägeschnitte jeweils ein Lineal den Stoß zwischen aneinander anschließenden Führungsplatten überdeckend auf diesen montierbar ist. Es ergibt sich dann ein zweischichtig überlappender Verbund. In einem Baukastensystem könnten die Führungsplatten und Lineale gleiche Längen haben, wobei im Falle der Aneinanderreihung bei Überlappung in Längsrichtung zu 50% jeweils zwei halblange Lineale für die Endbereiche im Baukastensystem vorgesehen sein könnten.

Um einen sauberen Schnitt mit der Anordnung zur Führung einer Handkreissäge perfekt auszuführen, ist es erforderlich, dass das Lineal mit geringem Überstand an der Führungsplatte montiert wird, dass die Verschleißkante am Lineal durch einen Schnitt mit der auf der Laufschiene geführten Handkreissäge gebildet wird und dass dann Sägeschnitte auf Werkstücken nach Anlegen der Verschleißkante am Werkstück an der gewünschten Schnittlinie ausgeführt werden, bis die Verschleißkante abgenützt und eine neue Verschleißkante durch Vorschieben des Lineals an der Führungsplatte und Nachschneiden bzw. Zurückschneiden des Lineals auf eine neue Verschleißkante gebildet wird. Erfahrungsgemäß können etwa 50 Türen vor Ort ohne Ausfransen, also mit messerscharfer Schnittkante, abgeschnitten werden, bis eine neue Verschleißkante benötigt wird, um dem Qualitätsstandard gerecht zu werden. Die neue Verschleißkante wird durch Vorschieben des Lineals um 3 mm, die dann weggeschnitten werden, gebildet.

### Kurze Beschreibung der Abbildungen der Zeichnungen

Ein Ausführungsbeispiel des Erfindungsgegenstandes ist in den Zeichnungen schematisch dargestellt; es zeigt: Fig. 1 eine Seitenansicht der Anordnung zur Führung einer Handkreissäge, wobei letztere strichliert angedeutet ist; Fig. 2 eine Draufsicht auf einen Teil der Anordnung; Fig. 3 eine Draufsicht auf eine aus mehreren Teilen zusammengesetzte bzw. aneinander gereihte Anordnung; und Fig. 4 eine Stirnansicht dazu in Prinzipdarstellung.

### Bester Weg zur Ausführung der Erfindung

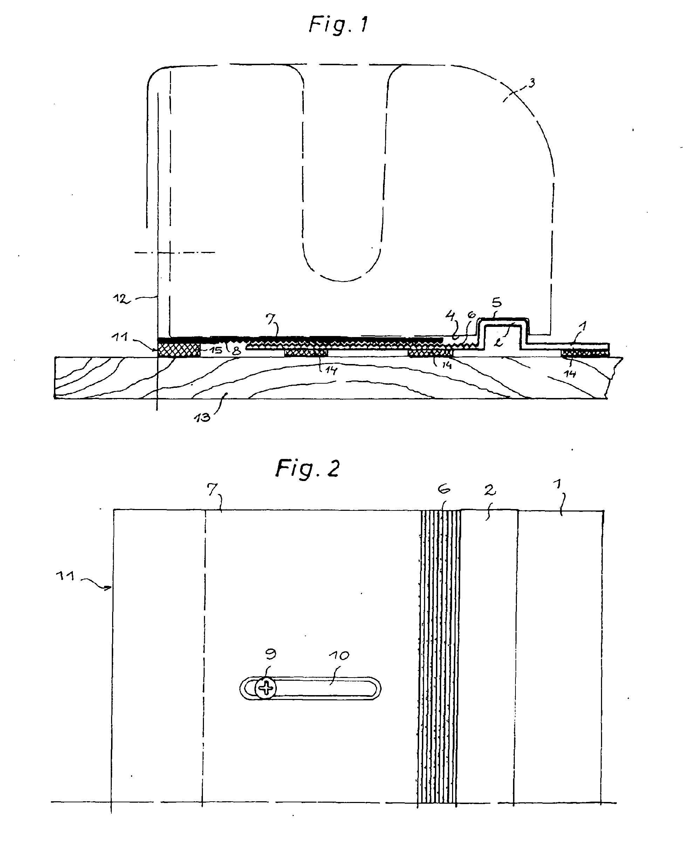

Gemäß Fig. 1 und 2 umfasst die erfindungsgemäße Anordnung zur Führung einer Handkreissäge, Stichsäge oder dergleichen eine Führungsplatte 1 aus Aluminium, die mit einer Führungsrippe 2 als Laufschiene für die Handkreissäge 3 ausgebildet ist. Die Gleitsohle 4 der Handkreissäge 3 weist eine Sicke 5 auf, die auf die Führungsrippe 2 passt. Ein Teil der Führungsplatte 1 ist mit einer längsgerichteten Rippung 6 ausgestattet, die in Seitenansicht einer Zahnung entspricht. Formschlüssig und in Querrichtung verstellbar ist ein flachleistenförmiges Lineal 7 an der Führungsplatte 1 angeschraubt. Dieses Lineal 7 weist an der Unterseite ebenfalls eine Rippung 8 auf, die in die Rippung 6 der Führungsplatte 1 im Überdeckungsbereich formschlüssig eingreift. Die Befestigung des Lineals 7 auf der Führungsplatte 1 erfolgt mittels Klemmschrauben 9, die durch Langlöcher 10 im Lineal 7 in Gewindebohrungen der Führungsplatte 1 eingeschraubt werden (Fig. 2).

Das Lineal 7, welches vorzugsweise die gleiche Länge hat wie die Führungsplatte 1, weist eine stirnseitige Verschleißkante 11 auf. Der Abstand der Verschleißkante 11 zur Führungsrippe 2 entspricht genau dem Abstand des Kreissägeblattes 12 zu der Sicke 5 in der Gleitsohle 4. Wenn man daher die erfindungsgemäße Anordnung auf ein Werkstück 13 legt, erfolgt der Sägeschnitt genau längs der Verschleißkante 11.

Sowohl an der Unterseite der Führungsplatte 1 als auch an der Unterseite des Lineals 7 sind Gummileisten 14 bzw. 15 vorgesehen, die die Anordnung auch während des Schnittes am Werkstück 13 festhalten. Die Gummileiste 15 fluchtet mit der Verschleißkante 11. Sie hat eine Höhe, die um die Wandstärke der Führungsplatte 1 größer ist als die Höhe der Gummileiste 14.

Die Verschleißkante 11 einschließlich der Gummileiste 15 liegt unmittelbar an der Schnittlinie am Werkstück 13 an und verhindert, dass der Sägeschnitt dort ausfranst, also dass Späne an der Kante herausgerissen werden. Mit der erfindungsgemäßen Anordnung ergibt sich ein messerscharfer Sägeschnitt am Werkstück.

Wenn nun die Verschleißkante 11 nach vielfachem Gebrauch abgenützt ist, also im Bereich des Aluminiums und bzw. oder an der Gummileiste Abweichungen von der idealen Schnittebene eingetreten sind, dann wird die Verschleißkante 11 nachgeschnitten. Es wird eine neue Verschleißkante 11 dadurch hergestellt, dass das Lineal 7 in der Verzahnung bzw. Rippung 6 bzw. 8 um eine oder zwei Teilungen vorgeschoben wird. Dazu wird die Verschraubung (Klemmschrauben 9 in den Langlöchern 10) gelöst und nach dem Verschieben wieder angezogen. Mit der auf der Führungsrippe 2 geführten Handkreissäge 3 wird ein kleiner stirnseitiger Bereich des Lineals durch einfachen Vorschub der Handkreissäge abgeschnitten (sowohl das Aluminium als auch die Gummileiste.) Es bildet sich dadurch die neue Verschleißkante 11 genau an der richtigen Stelle von selbst. Sie dient wieder als Anlagekante für viele nachfolgende Schnitte an verschiedensten Werkstücken 13.

Das Nachschneiden bzw. der beschriebene Vorgang kann mehrfach wiederholt werden. Es soll die Darstellung bloß das Grundprinzip erklären. So etwa könnte in der Praxis die Gummileiste 15 viel breiter ausgeführt sein, damit ein noch öfteres Nachschneiden der Verschleißkante 11 ermöglicht wird.

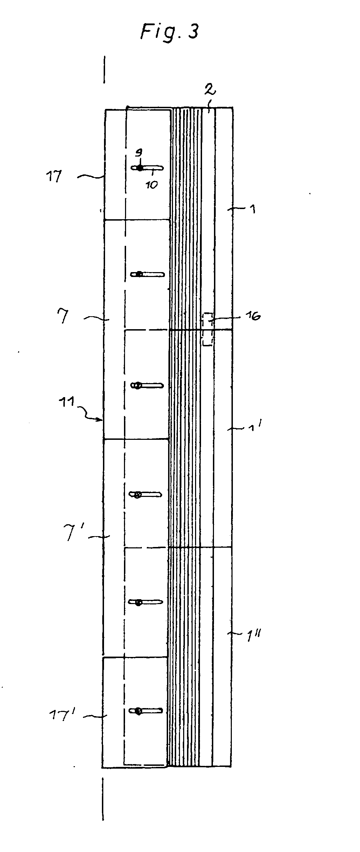

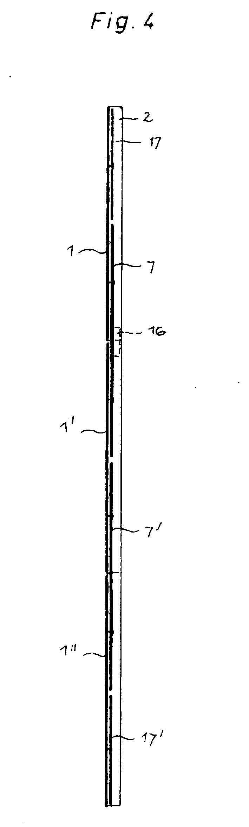

Aus Fig. 3 und 4 ist ersichtlich, wie durch Aneinanderreihung in Längsrichtung die Anordnung beliebig verlängerbar ist und stabil gehalten wird. Es sind drei Führungsplatten 1, 1', 1" nebeneinander in einer Linie dargestellt, wobei die Lineale 7, 7' jeweils um eine halbe Teilung (halbe Länge einer Führungsplatte 1, 1', 1") versetzt aufgeschraubt sind. Dadurch ergibt sich ein stabiler Verbund. In der hohlen Führungsrippe 2 können allenfalls noch Passstücke eingelegt und beiderseits festgeschraubt sein.

Infolge des Versatzes der Lineale 7, 7' gegenüber den Führungsplatten 1, 1', 1" können halbe bzw. um die Hälfte gekürzte Lineale 17 und 17' in den Endbereichen vorgesehen sein.

## Patentansprüche

1. Anordnung zur Führung einer Handkreissäge (3) auf einem Werkstück (13) zur Herstellung eines messerscharfen Sägeschnittes, mit einer auf dem Werkstück (13) reibungsschlüssig auflegbaren Führungsplatte (1), die eine längslaufende Führungsrippe (2) als Laufschiene für die mit komplementärer Linearführung, z.B. mit einer Sicke (5) in der Gleitsohle (4) ausgestattete Handkreissäge (3) aufweist, wobei die Anordnung mit einer stirnseitigen Verschleißkante (11) unmittelbar längs des auszuführenden Sägeschnittes ausgebildet ist, die mit dem Sägeblatt (12) fluchtet, wobei die Verschleißkante (11) auf einem an der Führungsplatte (1) lösbar befestigten und in Querrichtung zu der Führungsplatte (1) verstellbaren Lineal (7) vorgesehen ist, **dadurch gekennzeichnet dass** die Führungsplatte (1) bodenseitig mit Gummileisten (14) zur rutschfesten Positionierung auf einem Werkstück (13) ausgebildet ist und dass das Lineal (7) außerhalb des Überdekkungsbereichs mit der Führungsplatte (1) ebenfalls mindestens eine Gummileiste (15) aufweist, deren Höhe der Führungsplattenstärke einschließlich der Gummileistenhöhe auf der Führungsplatte (1) entspricht, und dass die Gummileiste (15) oder eine der Gummileisten (15) des Lineals (7) bodenseitig unmittelbar mit der Verschleißkante (11) fluchtet.

2. Anordnung nach Anspruch 1, **dadurch gekennzeichnet, dass** das Lineal (7) mittels Klemmschrauben (9) in Längsschlitzen (10) zu der Führungsplatte (1) verstellbar ist.

3. Anordnung nach Anspruch 1 oder 2, **dadurch gekennzeichnet, dass** das flachleistenförmige Lineal (7) sowie die Führungsplatte (1) aus Metall bestehen und dass die einander zugewandten Flächen des Lineals (7) einerseits und der Führungsplatte (1) anderseits im Überdeckungsbereich eine flächig ineinander greifende Rippung (6, 8) bzw. Verzahnung aufweisen.

4. Anordnung nach Anspruch 3, **dadurch gekennzeichnet, dass** das flachleistenförmige Lineal (7) sowie die Führungsplatte (1) aus Aluminium bestehen.

5. Anordnung nach einem der Ansprüche 1 bis 4, **dadurch gekennzeichnet, dass** bei Aneinanderreihung von Führungsplatten **(1,** 1', 1") für längere Sägeschnitte jeweils ein Lineal (7, 7') den Stoss zwischen aneinander anschließenden Führungsplatten (1, 1', 1") überdeckend auf diesen montierbar ist.

6. Verfahren zur Ausführung messerscharfer Sägeschnitte auf Werkstücken (13) mit einer Anordnung zur Führung einer Handkreissäge (3) nach einem der Ansprüche 1 bis 5, **dadurch gekennzeichnet, dass** das Lineal mit geringem Überstand an der Führungsplatte (1) montiert wird, dass die Verschleißkante (11) am Lineal durch einen Schnitt mit der auf der Laufschiene geführten Handkreissäge (3) gebildet wird und dass dann Sägeschnitte auf Werkstücken (13) nach Anlegen der Verschleißkante (11) am Werkstück (13) an der gewünschten Schnittlinie ausgeführt werden, bis die Verschleißkante (11) abgenützt und eine neue Verschleißkante (11) durch Vorschieben des Lineals an der Führungsplatte (1) und Nachschneiden bzw. Zurückschneiden des Lineals auf eine neue Verschleißkante (11) gebildet wird.

## Claims

1. Arrangement for the guidance of a circular saw (3) on a workpiece (13) to produce a very sharp saw cut, with a guide plate (1) which may be placed with frictional locking on the workpiece (13) and which has a longitudinally-running guide rib (2) as a running rail for the circular saw (3) which is equipped with complementary linear guidance, e.g. with a bead (5) in the sliding base (4), wherein the arrangement is formed by an end-face wearing edge (11) directly along the saw cut to be made and flush with the saw blade (12), wherein the wearing edge (11) is provided on a ruler (7) attached releasably to the guide plate (1) and adjustable at right-angles to the guide plate (1), **characterised in that** the guide plate (1) is designed with rubber strips (14) on the base for non-slip positioning on a workpiece (13), and that the ruler (7) also has outside the area of overlap with the guide plate (1) at least one rubber strip (15) with a height corresponding to the height of the guide plate (1) including the height of the rubber strip on the guide plate (1), and that the base of rubber strip (15) or of one of the rubber strips (15) of the ruler (7) is aligned directly with the wearing edge (11).

2. Arrangement according to claim 1, **characterised in that** the ruler (7) is adjustable relative to the guide plate (1) by means of clamping screws (9) in longitudinal slots (10).

3. Arrangement according to claim 1 or 2, **characterised in that** the flat-strip-shaped ruler (7) and the guide plate (1) are made of metal, and that the facing surfaces of the ruler (7) on the one hand and of the guide plate (1) on the other hand have ribbing (6, 8) or teeth engaging in one another over their flat surfaces.

4. Arrangement according to claim 3, **characterised in that** the flat-strip-shaped ruler (7) and the guide plate (1) are made of aluminium.

5. Arrangement according to any of claims 1 to 4 **characterised in that**, in the side-by-side mounting of guide plates (1, 1', 1") for longer saw cuts, in each case a ruler (7, 7') may be fitted to cover the joint between adjacent guide plates (1, 1', 1").

6. Method for the execution of very sharp saw cuts on workpieces (13) using an arrangement for the guidance of a circular saw (3) in accordance with any of claims 1 to 5, **characterised in that** the ruler is fitted to the guide plate (1) with a slightly projecting end, that the wearing edge (11) on the ruler is formed by a cut by the circular saw (3) guided on the running rail, and that saw cuts on workpieces (13) are then made at the desired cutting line after placing the wearing edge (11) on the workpiece (13), until the wearing edge (11) is worn away and a new wearing edge (11) is formed by pushing the ruler forward on the guide plate (1), and further cutting or cutting back of the ruler to a new wearing edge (11).

## Revendications

1. Agencement de guidage d'une scie circulaire manuelle (3) sur une pièce à usiner (13) pour l'établissement d'une coupe de scie tranchante, avec une plaque de guidage (1) pouvant être retenue par friction sur la pièce à usiner (13), qui présente une nervure de guidage (2) s'étendant longitudinalement servant de rail de guidage pour la scie circulaire manuelle (3) équipée d'un guidage linéaire complémentaire, par exemple d'une moulure (5) dans la semelle de crosse (4), l'agencement étant réalisé avec une arête d'usure (11) côté frontal directement le long de la coupe de scie à réaliser, laquelle s'aligne sur la lame de scie (12), l'arête d'usure (11) étant prévue sur une règle (7) réglable dans le sens transversal par rapport à la plaque de guidage (1) et fixée de manière amovible sur la plaque de guidage (1), **caractérisé en ce que** la plaque de guidage (1) est réalisée côté fond avec des baguettes en caoutchouc (14) pour le positionnement antidérapant sur une pièce à usiner (13) et **en ce que** la règle (7) présente en dehors de la zone de recouvrement avec la plaque de guidage (1) également au moins une baguette en caoutchouc (15), dont la hauteur correspond à l'épaisseur de la plaque de guidage y compris la hauteur des baguettes en caoutchouc situées sur la plaque de guidage (1), et **en ce que** la baguette en caoutchouc (15) ou l'une des baguettes en caoutchouc (15) de la règle (7) s'aligne côté fond directement sur l'arête d'usure (11).

2. Agencement selon la revendication 1, **caractérisé en ce que** la règle (7) peut être réglée en position au moyen de vis de serrage (9) dans des fentes longitudinales (10) par rapport à la plaque de guidage (1).

3. Agencement selon la revendication 1 ou 2, **caractérisé en ce que** la règle (7) en forme de baguette plate ainsi que la plaque de guidage (1) se composent de métal et **en ce que** les surfaces tournées l'une vers l'autre de la règle (7) d'une part et de la plaque de guidage (1) d'autre part présentent dans la zone de recouvrement des nervurations (6, 8) ou dentures s'engageant à plat l'une dans l'autre.

4. Agencement selon la revendication 3, **caractérisé en ce que** la règle (7) en forme de baguette plate ainsi que la plaque de guidage (1) se composent d'aluminium.

5. Agencement selon l'une des revendications 1 à 4, **caractérisé en ce que** lors de la juxtaposition de plaques de guidage (1, 1', 1") pour de plus longues coupes de scie, à chaque fois une règle (7, 7') peut être montée sur celles-ci de manière à recouvrir le joint entre des plaques de guidage (1, 1', 1") contiguës.

6. Procédé de réalisation de coupes de scie tranchantes sur des pièces à usiner (13) avec un agencement de guidage d'une scie circulaire manuelle (3) selon l'une des revendications 1 à 5, **caractérisé en ce que** la règle est montée avec un faible dépassement sur la plaque de guidage (1), **en ce que** l'arête d'usure (11) est formée sur la règle par une coupe avec la scie circulaire manuelle (3) guidée sur le rail de guidage et **en ce que** des coupes de scie sont ensuite réalisées sur des pièces à usiner (13) après l'application de l'arête d'usure (11) contre la pièce à usiner (13) sur la ligne de coupe souhaitée jusqu'à ce que l'arête d'usure (11) soit usée et qu'une nouvelle arête d'usure (11) soit formée par l'avancement de la règle sur la plaque de guidage (1) et la nouvelle coupe ou la coupe en arrière de la règle pour réaliser une nouvelle arête d'usure (11).
